Europäisches Patentamt

European Patent Office

Office européen des brevets

(11) Publication number : **0 150 795**
**B1**

# EUROPEAN PATENT SPECIFICATION

(45) Date of publication of patent specification :
09.09.87

(51) Int. Cl.⁴ : **F 02 M 35/10**

(21) Application number : **85100595.9**

(22) Date of filing : **21.01.85**

(54) **Inlet manifold for normal induction or supercharged internal combustion engines featuring indirect fuel injection.**

(30) Priority : **27.01.84 IT 4000984**

(43) Date of publication of application :
**07.08.85 Bulletin 85/32**

(45) Publication of the grant of the patent :
**09.09.87 Bulletin 87/37**

(84) Designated contracting states :
**AT BE CH DE FR GB IT LI LU NL SE**

(56) References cited :
**FR-A- 2 167 964**
**US-A- 2 947 293**

(73) Proprietor : **FERRARI SOCIETA' PER AZIONI ESERCI-
ZIO FABBRICHE AUTOMOBILI E CORSE**
**31, Viale Trento Trieste**
**I-41100 Modena (IT)**

(72) Inventor : **Materazzi, Nicola, Dr.**
**15, Via Flavio Gioia**
**I-41053 Maranello (Modena) (IT)**

(74) Representative : **Gardi, Giuliano**
**GARDIPATENT Palazzo Prora Via Giardini, 605**
**I-41100 Modena (IT)**

## Description

The invention described herein relates to an inlet manifold for normal air-induction or supercharged internal combustion engines featuring indirect fuel injection — that is, a part for internal combustion engines fitted to automobiles in particular, both of the normal induction and of the supercharged type, wherein fuel is injected into the intake passage preceding the engine cylinders' combustion chambers.

The prior art embraces manifolds in which each inlet section consists of a single or multiple intake passage admitting air or air-and-fuel mixture into a respective combustion chamber.

US-A-2947293 discloses an inlet manifold for internal combustion engines featuring indirect fuel injection comprising a plenum chamber and a plurality of ram pipes each of which connects the plenum chamber with the cylinder head intake passage provided in the engine cylinder head for each cylinder.

Said ram pipes may be generally rectangular in cross section and the area of the cross section may decrease uniformly from the inlet end to the exit end.

The uniform decrease in area causes a corresponding increase in velocity when air is flowing through the ram pipes, providing a ramming effect which aids in dynamic supercharging of the engine.

The final section of the ram pipes and the section of the intake passages need to be as narrow as practicable in order to avoid levels of emission in excess to those tolerated by environmental standards. However, whilst pollution can be limited at low engine speeds by virtue of increased turbulence, the same object is not achieved at the higher engine speeds.

Moreover, the pollution hazard from the inlet manifold is greatest at idling speed, due to the much-decreased proportion of air, and to its flow-pattern, which is laminar in relation to the intake passage axis. This type of flow in hibits efficient mixture, especially in passages of larger cross sectional area, the results of which are loss of efficiency, and exhaust emissions containing considerable quantities of matter escaping combustion.

FR-A-2167964 describes a diesel engine featuring direct fuel injection, comprising an intake manifold in which each intake passage is divided into or more passages the axis of which converge dow toward the cylinder inlet ; the division of the intake passage being produced by means of a transverse web or baffle located at the initial stage of the intake passage or at the inside of the passage, or at the final stage of the passage and exhibiting an elongated upturned pear drop profile when seen in cross section. The presence of the web or baffle is intended to increase the turbulence of the air at the inside of the combustion chamber.

The turbulence at the inside of the combustion chamber is desirable in diesel engines featuring direct fuel injection in order to have a more complete and regular combustion of the fuel, but is to be avoided in internal combustion engines featuring indirect fuel injection wherein the turbulence at the inside of the combustion chamber is an obstacle to the complete and regular combustion of the fuel.

The prior art thus described syands in need of wast improvement, with regard in particular to the possibility of elliminating narrow air-intake passages whilst maintaining emission levels well within those laid down by environmental standards.

From the foregoing, one may discern the need for a solution to the technical problem of embodying an inlet manifold wherein each intake passage responds to the necessity for keeping emission levels within standards limits, whilst permitting the generous air-flow required for high engine speeds and high output, this being achieved by increasing turbulence in the air intake passage without any narrowing down of its cross sectional area — on the contary, widening the area where necessary.

The invention described herein solves the problem thus summarised by adopting an inlet manifold wherein intake passages to each cylinder are divided at the initial stage into two symmetrical passages by a top transverse web, or baffle, such that the axes thereof are disposed in a V-formation, converging toward the space beneath into which fuel is injected, and coming together at a point overlying said space marginally beyond the baffle's termination. The precise angle of said V-formation is determined by the distance between cylinder centres, but would normally be of the order of 12° to 30°. Seen in section, the baffle exhibits an inverted pear-drop profile having a wide curvature uppermost, embodied such as to create two passages whose cross section gradually diminishes — producing a taper of between 3° and 13° — toward the restriction where mixture of the fuel and air is brought about, below the fuel injector nozzle.

Advantages obtained with the invention are : markedly reduced exhaust emission levels even at low engine speeds ; an inlet configuration conductive to high performance ; ease and economy of manufacture ; increased output and reduced fuel consumption. Comparative tests carried out under identical conditions on a V-8 engine fitted a) with a conventional inlet manifold and b) with an inlet manifold according to the invention, produced the following results :

a) conventional inlet manifold

(See Tables page 3)

2

|                 | CO%   | HC (parts per million) |
|-----------------|-------|------------------------|
| right hand bank | 1     | 350                    |
| left hand bank  | 0.9   | 340                    |
| total emission  | 1     | 350                    |

b) inlet manifold according to the invention :

|                 | CO%   | HC (parts per million) |
|-----------------|-------|------------------------|
| right hand bank | 0,8   | 120                    |
| left hand bank  | 0,7   | 110                    |
| total emission  | 0,7   | 110                    |

It will be seen that combustion is more complete in the latter instance, thanks to the better mixture of fuel and air produced.

An example embodiment of the invention will now be described with the aid of the four attached sheets of drawings, in which :

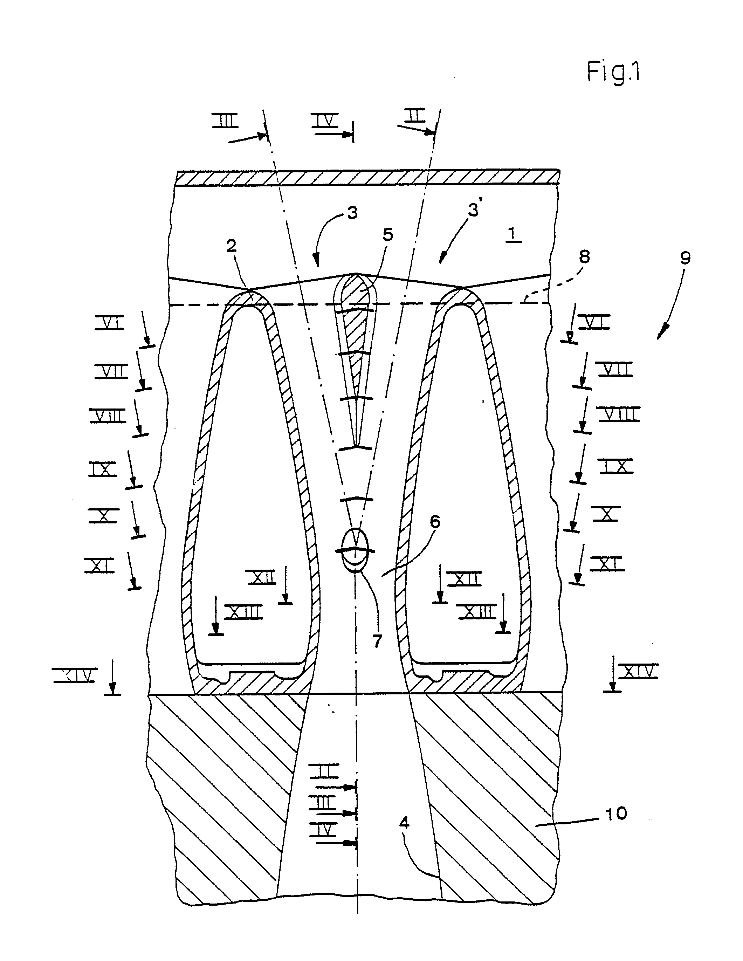

Figure 1 is the longitudinal section through one of the air-intake and fuel/air mixture passages making up an inlet manifold as described herein ;

Figure 2 is the section through II-II in Figure 1 which illustrates one of the two divided intake passages which converge toward and unite in the fuel mixture passage ;

Figure 3 is the section through III-III in Figure 1 which illustrates the remaining intake passage of said two divided passages which converge toward and unite in the same fuel mixture passage ;

Figure 4 is the section through IV-IV in Figure 1 which illustrates the web, or baffle, separating said two divided intake passages ;

Figure 5 shows figure 4, seen from the right ;

Figures 6, 7, 8, 9, 10, 11, 12, 13 and 14 are scaled-down sections through VI-VI, VII-VII, VIII-VIII, IX-IX, X-X, XI-XI, XII-XII, XIII-XIII and XIV-XIV respectively in Figure 1, which run from top to bottom of the single air intake passage according to the invention.

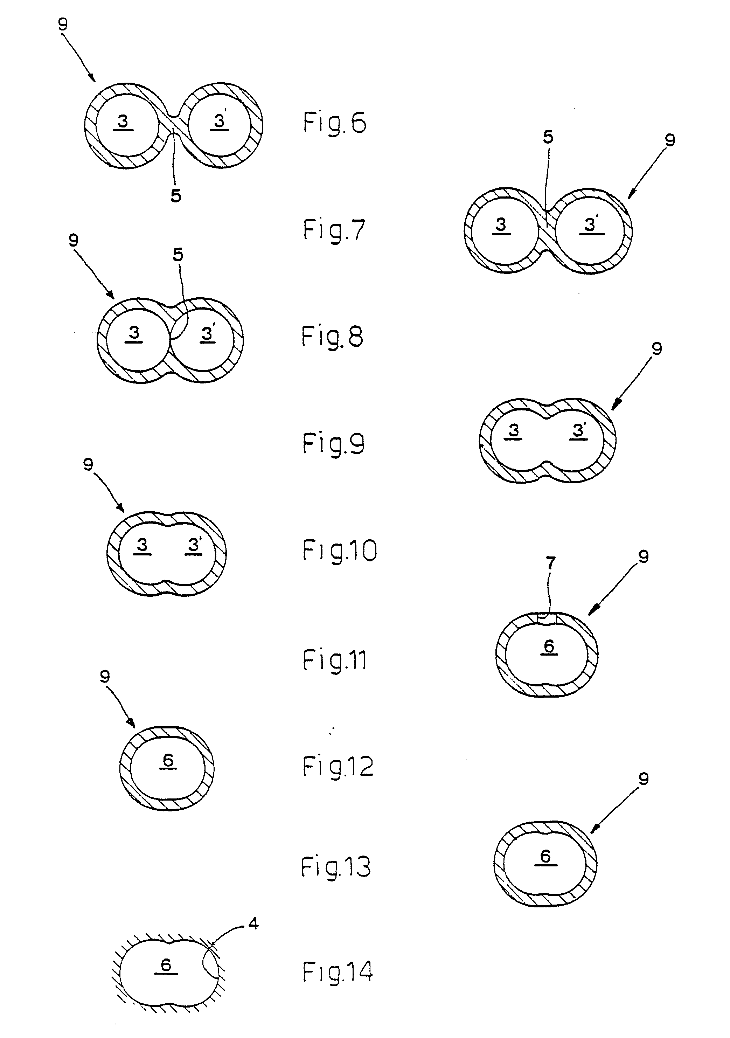

In Figures 6, 7, 8, 9, 10 and 11, each section is taken through the converging axes of the two divided intake passages, whilst in Figures 12, 13 and 14, sections are taken through the fuel mixture passage. The section through XII-XII represents the narrowest point of the entire intake, this located immediately beneath the injector nozzle.

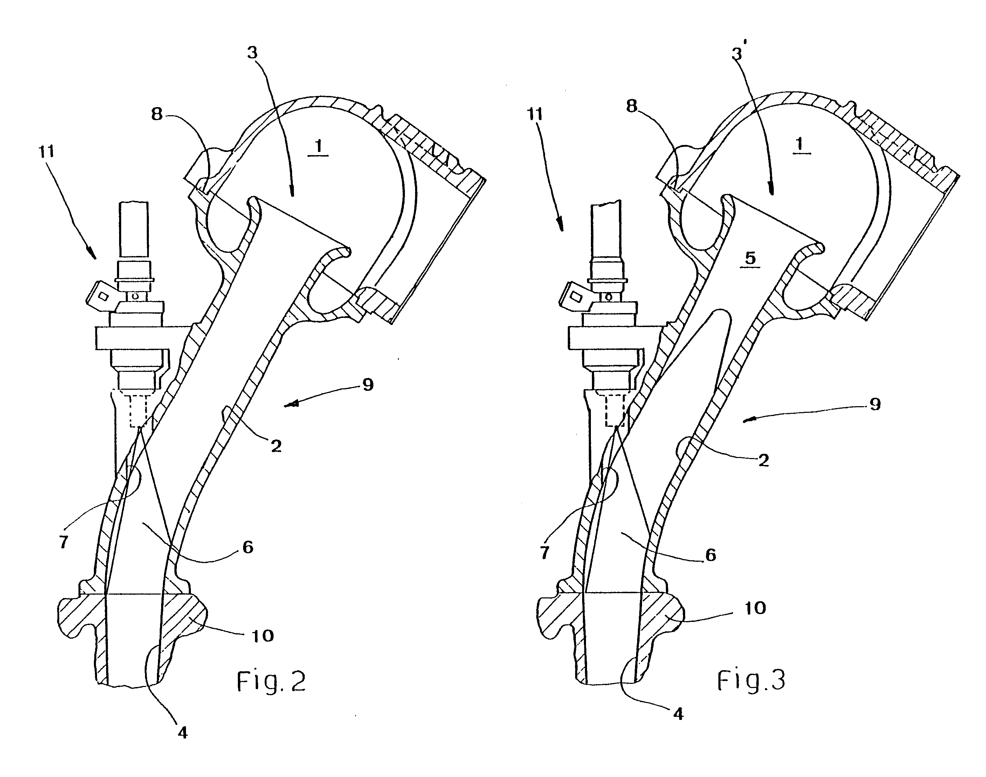

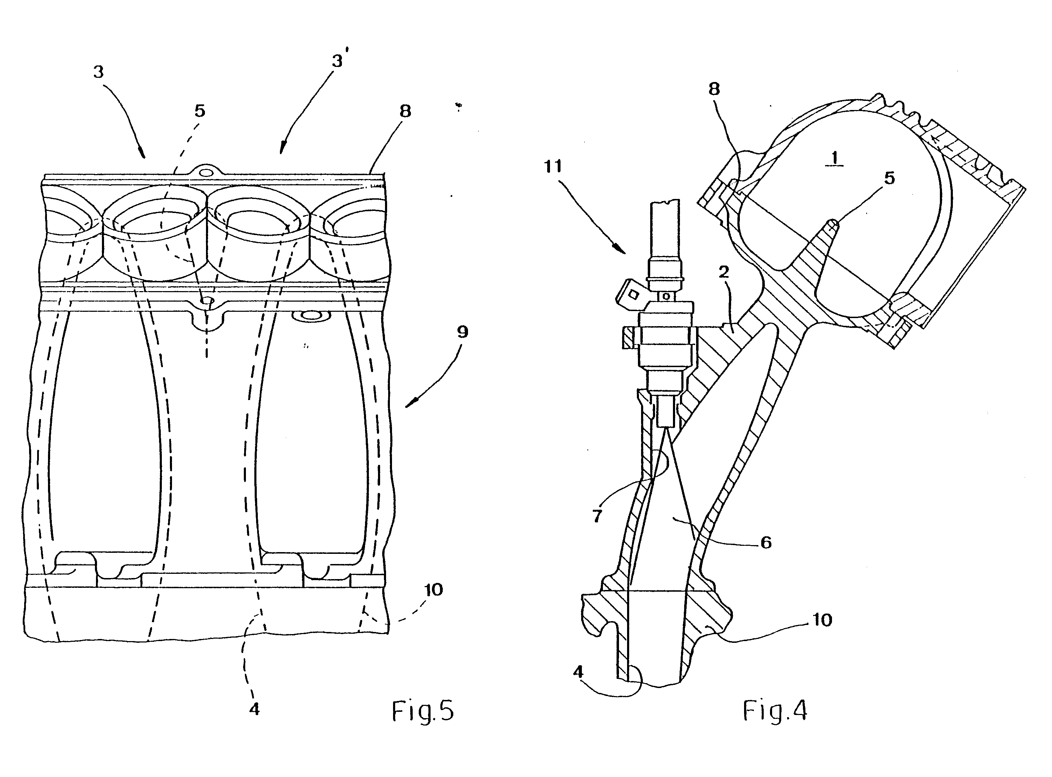

With reference to the drawings, 1 denotes the chamber from where induced or supercharged air enters the various manifold intake passages. 2 denotes the side-walls of the two divided passages 3 and 3' which take air from the chamber 1 into the mixture passage 4 located in the engine's cylinder head. 5 denotes a web or baffle exhibiting an elongated upturned pear-drop shape when seen in section — the curved part of which offered to the manifold — which separates passage 3 from passage 3' in such a way that the axes of the latter converge toward a restriction 6 where fuel, injected there into substantially at a tangent via an opening 7, mixes with air from the manifold. 8 denotes the plane common to flanged mating surfaces which unite the chamber 1 of the manifold to the main manifold casting 9. 10 denotes the cylinder head, and 11 denotes the injector nozzle which squirts fuel (see figs 2, 3 & 4) through the opening 7 aforementioned. With normal induction, function of the manifold is as follows : air drawn in by the engine from chamber 1 is channelled through the two intake passages 3 & 3' toward a respective cylinder in such a way that the twin streams converge toward restriction 6 where it mixes with fuel injected via opening 7. The slight taper of each passage 3 & 3' enforces acceleration of the divided flow of air, thereby generating and exploiting kinetic energy in order to create interferences between the twin converging streams, which generates a degree of turbulence ensuring a more through mixture of fuel and air and by definition, lower exhaust emission levels. In supercharged engines the chamber 1 supplying air to the cylinders will be pressurised, whilst the principle of the invention and its function remain the same as already described.

When carrying the invention into effect, materials, dimensions, and design and construction details may all differ from those suggested in the description and accompanying drawings whilst remaining equivalent in terms of the art, and by no means straying from within the bounds of protection afforded by appended claims. Further, an inlet manifold according to the invention might be fitted to any internal combustion engine featuring indirect fuel injection, regardless of the number of cylinders and regardless of the number of valves to each head. Similarly, the countersunk profile of each port channelling air into passages 3 and 3' — being dependent on the curvature of the top end of the web, or baffle 5 — will be plotted according to the requirements of design from engine to engine.

**Claims**

1. An inlet manifold for normal induction or super-charged internal combustion engines featuring indirect fuel injection, wherein each cylinder intake section comprises a chamber (1) supplying normally-induced or supercharged air, an opening (7) through which to inject fuel into a restriction (6) incorporated into the casting (9) wherein fuel and air are mixed, and a final mixture inlet passage (4) to the cylinder, located within the cylinder head (10), characterised in that each intake passage is divided into two symmetrical passages (3 & 3') tapering toward a restriction (6) located beneath the opening (7) through which fuel is injected ; the axes of said passages (3 & 3') converging in V-formation dow toward the point of injection ; the division of the intake passage being produced by a transverse web, or baffle (5) located at the initial stage of the intake passage and exhibition an elongated, upturned pear-drop profile when seen in cross-sectin.

2. Inlet manifold as in claim 1 characterised in that each of the divided passages (3) and (3') is countersunk at the top according to the curvature of the top end of said web or baffle (5), and tapers toward said point of injection to a degree of between 3° and 12°.

3. Inlet manifold as in claim 1 characterised in that the angle separating the axes of said passages in converging in V-formation down toward said point of injection, is between 12° and 30°.

## Patentansprüche

1. Ansaugkruemmer fuer ansaugende oder aufgeladene Verbrennungsmotoren mit indirekter Brennstoffeinspritzung, bei welchem jeder Zylindereinlassabschnitt eine Foerderkammer (1) fuer angesaugte oder aufgeladene Luft, eine Einspritzoeffnung (7), ueber welche Brennstoff in eine als Teil des Kruemmergehaeuses (9) ausgebildete Drossel (6) gespritzt wird, in welcher Luft und Brennstoff gemischt werden, und eine im Zylinderkopf (10) angeordnete Gemischeinlassleitung (4) aufweist, dadurch gekennzeichnet, dass jeder Einlass in zwei symmetrisch angeordnete Leitungen (3, 3') unterteil ist, die in Richtung der unterhalb der Brennstoffeinspritzoeffnung (7) liegenden Drossel (6) verjuengt sind, dass die Achsen der beiden Leitungen (3, 3') gegen den Einspritzbereich V-foermig verlaufen und dass die Aufteilung des Einlasses durch eine im Anfangsbereich der Einlassleitung angeordnete Querwand bzw. Prallwand (5) gebildet wird, die im Schnitt ein Langgestrecktes, nach oben tropfenfoermiges Profil aufweist.

2. Ansaugkruemmer nach Anspruch 1, dadurch gekennzeichnet, dass jede der geteilten Leitungen (3, 3') an der Oberseite entsprechend der Kruemmung des oberen Endes der tropfenfoermigen Querwand (5) angesenkt ist und gegen den Einspritzbereich eine Verjuengung zwischen 3° und 12° aufweist.

3. Ansaugkruemmer nach Anspruch 1, dadurch gekennzeichnet, dass der den Achsen der im Einspritzbereich V-foermig zulaufenden Leitungen zugeordnete Winkel zwischen 12° und 30° betraegt.

## Revendications

1. Collecteur d'admission, pour moteurs à combustion interne à injection indirecte, à aspiration naturelle ou suralimentés, dans lesquels chaque élément d'admission à un cylindre comprend une chambre (1) fournissant de l'air à aspiration naturelle ou de suralimentation, une ouverture (7) permettant d'injecter du combustible dans un étranglement (6) que comprend le corps (9) dans lequel sont mélangés le combustible et l'air et un passage d'introduction (4) du mélange final dans le cylindre, situé dans la culasse (10), caractérisé en ce que chaque passage d'introduction est divisé en deux passages symétriques (3, 3') se rétrécissant vers un étranglement (6) situé au-dessous de l'ouverture (7) par laquelle le combustible est injecté, les axes desdits passages (3, 3') convergeant en V de haut en bas vers le point d'injection ; la division du passage d'introduction étant réalisée par une cloison ou chicane transversale (5) située au commencement du passage d'introduction et possédant, en section transversale, un profil allongé en forme de goutte renversée.

2. Collecteur d'admission selon la revendication 1, caractérisé en ce que chacun des passages (3, 3') s'évase vers le haut selon la courbure existant à l'extrémité supérieure de ladite cloison ou chicane (5) et se rétrécit vers ledit point d'injection sous un angle compris entre 3° et 12°.

3. Collecteur d'admission selon la revendication 1, caractérisé en ce que l'angle formé entre les axes des deux passages qui convergent en V de haut en bas vers le point d'injection est compris entre 12° et 30°.

Fig.1

Fig.3

Fig.2

Fig.5

Fig.4

0 150 795

0 150 795

Fig.6

Fig.7

Fig.8

Fig.9

Fig.10

Fig.11

Fig.12

Fig.13

Fig.14

4